# EUROPEAN PATENT APPLICATION

(11) **EP 2 439 832 A2**
(43) Date of publication of application: **11.04.2012**
(21) Application number: 11184548.3
(22) Date of filing: 10.10.2011
(51) Int. Cl.: H02K 1/14

(54) **Divided stator core of an electric power steering motor**

(30) Priority: 08.10.2010 KR 20100098419
(71) Applicant: LG Innotek Co., Ltd., Seoul 100-714 (KR)
(72) Inventor: Kim, Youngchul, 100-714 Seoul (KR)
(74) Representative: Novagraaf Technologies

(57) **Abstract**

Disclosed is a divided core of an electric power steering (EPS) motor stator that is easy in assembly and disassembly of divided cores (20) and that can accurately maintain concentricity of the divided cores (20) when the divided cores (20) are assembled, wherein the divided core (20) including a yoke (30) forming a periphery of the stator core and a tooth (21) protruded from the yoke (30) to an inner circumferential direction, further includes an upper lug (31) circumferentially protruded on an upper side of a distal end of the yoke, and a lower lug (32) circumferentially protruded on a lower side of the other distal end of the yoke.

## Description

### CROSS-REFERENCE TO RELATED APPLICATION

The present application is based on, and claims priority from, Korean Application Number 10-2010-0098419, filed October 8, 2010, the disclosure of which is incorporated by reference herein in its entirety.

### BACKGROUND OF THE DISCLOSURE

### 1. Field of the Disclosure

The present disclosure relates to a divided core of an EPS motor stator, and more particularly to a divided core of an EPS motor stator that is easy in assembly and disassembly of divided cores and that can accurately maintain concentricity of the divided cores when the divided cores are assembled.

### 2. Discussion of the Related Art

Generally, almost every vehicle employs an electric power-assist steering system. Such an electric power-assist steering system generates an assist force based on the steering torque and the steering angle, so as to enhance the steering performance of the vehicle.

That is, a steering system that assists a steering force of a vehicle with a separate power is used to enhance the motion stability of a vehicle. Conventionally, the auxiliary steering device uses hydraulic pressure, but an Electronic Power Steering (EPS) system adapted to transmit a rotation output of an electric motor to a steering shaft via a speed reduction mechanism has been increasingly employed these days from a viewpoint of a reduction in engine load, a reduction in weight, an enhanced steering stability and a quick restoring force.

The EPS system is such that an Electronic Control Unit (ECU) drives a motor in response to steering conditions detected by a speed sensor, a torque angle sensor and a torque sensor to enhance a steering stability and provide a quick restoring force, whereby a driver can safely steer a vehicle.

The EPS system is also such that a motor assists a torque manipulating a steering wheel to allow a driver to steer a vehicle with less power, where the motor employs a Brushless Direct Current (BLDC) motor.

The BLDC motors have been increasingly used because the brushless motors are excellent in maintenance property, have small size, and are capable of generating high torque. The BLDC motor is a DC motor mounted with an electronic rectifying system, excluding those mechanical contact portions such as a brush and a rectifier from the conventional DC motor. The BLDC motor largely includes a stator and a rotor, where the stator is wound with a coil, and the rotor is coupled to a magnet and rotated by electromagnetic interaction therebetween.

The stator includes a core and a coil, and generally employs a plurality of divided cores these days that are connected in a circular shape.

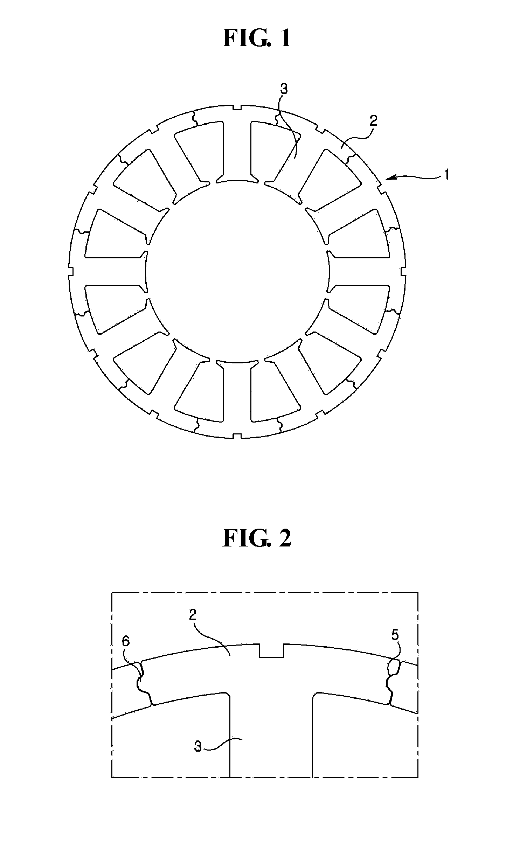

FIG. 1 is a plan view illustrating divided cores of a stator core in an EPS motor.

Each of the divided cores (1) in the stator core of the EPS motor includes yokes (2) each connected in a circular shape from a periphery and teeth (3) each tooth (3) protruded from the yoke (2) to face a magnet (not shown). A coil (not shown) is wound along the periphery of the teeth (3) to generate an electromagnetic force.

FIG. 2 is a plan view illustrating an enlarged coupling portion of a divided core. Each of the yokes (2) in the divided cores (1) is circularly formed to be coupled at a lateral surface. Therefore, the yoke (2) is formed at both distal ends with a groove unit (5) and a lug unit (6) for coupling. The lug unit (6) formed at the yoke (2) of each divided core (1) is inserted into the groove unit of adjacent divided core to generate a coupling force.

However, the conventional divided core (1) is disadvantageous in that an assembly process is complicated, and there is a difficulty in disassembly and maintenance of each divided core, because the lug unit (6) has to be press-fitted into the groove unit (5) for coupling in a ring-shaped stator core.

Another disadvantage is that there is generated a twisted concentricity among the divided cores after the coupling is completed, where errors are aggravated to increase a cogging torque, thereby increasing noise and vibration.

### BRIEF SUMMARY

The present disclosure is directed to cope with the abovementioned disadvantages and it is an object of the present disclosure to provide a divided core of an EPS motor stator that is easy in assembly and disassembly of divided cores and that can accurately maintain concentricity of the divided cores due to improved coupling structure of cores when the divided cores are assembled, whereby operational reliability of EPS motor can be assured.

Technical problems to be solved by the present disclosure are not restricted to the above-mentioned description, and any other technical problems not mentioned so far will be clearly appreciated from the following description by the skilled in the art.

In one general aspect of the present disclosure, there is provided a divided core of an EPS motor stator including a yoke forming a periphery of the stator core and a tooth protruded from the yoke to an inner circumferential direction, the divided core comprising: an upper lug circumferentially protruded on an upper side of a distal end of the yoke; and a lower lug circumferentially protruded on a lower side of the other distal end of the yoke.

Preferably, each of upper and lower surfaces of the upper and lower lugs forms a concentric arc relative to a center axis of the stator core.

Preferably, the divided core of an EPS motor stator further includes a lower lug accept portion formed at a lower side of the upper lug to form a staircase from a lower surface of the yoke, and an upper lug accept portion formed at an upper side of the lower lug to form a staircase from an upper surface of the yoke.

Preferably, a thickness of the upper lug matches a height of the upper lug accept portion, and a thickness of the lower lug matches a thickness of the lower lug accept portion.

Preferably, an angle formed by the lower lug accept portion and a distal end of the lower lug is one pitch of the EPS motor based on the center axis of the stator core.

Preferably, the yoke, the lower surface of the lower lug and a periphery of the tooth are coupled by an insulator formed with insulating material and a coil.

The divided core of an EPS motor stator thus configured according to the present disclosure is advantageous in that a coupled area of divided cores is formed with staircase sills to dispense with the press-fitting method, whereby the divided cores can be easily assembled, disassembled and maintained.

Another advantage is that a coupled area is broadened to enable a tight contact among the divided cores and an accurate concentricity, whereby an operational reliability of motor can be enhanced.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG. 1 is a plan view illustrating cores of an EPS motor stator according to prior art;
FIG. 2 is an enlarged plan view illustrating a coupled area of divided cores of EPS motor stator according to prior art;
FIG. 3 is a plan view illustrating a divided core of EPS motor stator according to the present disclosure;
FIG. 4 is a plan view illustrating a core of EPS motor stator according to the present disclosure; and
FIG. 5 is a plan view illustrating a coil wound on a divided core of EPS motor stator according to the present disclosure.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted. Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

Now, a divided core of EPS motor stator according to the exemplary embodiments of the present disclosure will be described in detail with reference to the accompanying drawings.

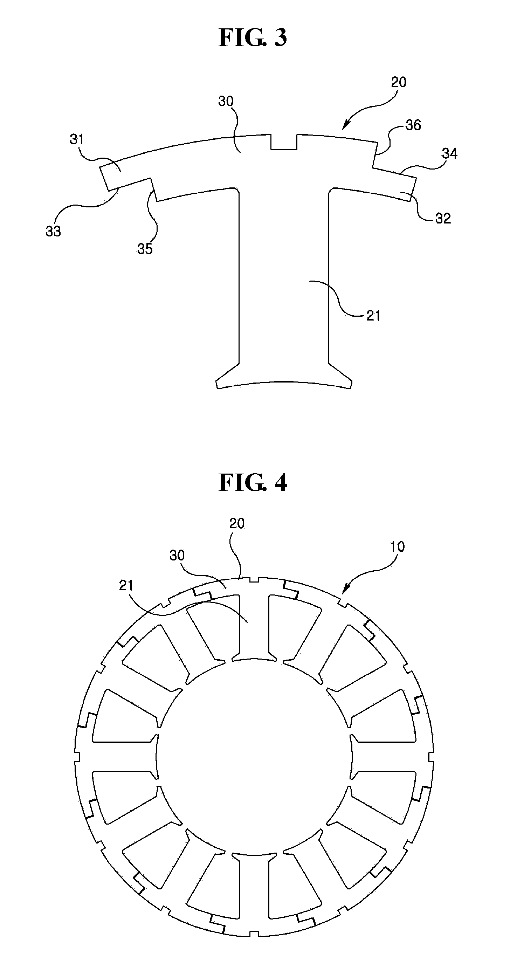

FIG.3 is a plan view illustrating a divided core of EPS motor stator according to the present disclosure.

A stator core (10) forms a substantially circular ring by connecting a plurality of divided cores (20) together. Each divided core (20) forms a periphery of the stator core (10), and includes yokes (30) each connected to the other yoke, and teeth (21) each tooth protruded inwardly from the yoke (30) to electromagnetically interact with a magnet (not shown) of a rotor.

Each of the yokes (30) takes the shape of a substantial arc to form a circumference when interconnected.

Now, structure of the divided cores (20) will be described, where a surface formed by the tooth (21) from the yoke (30) is defined as a lower surface or a lower side, and a surface opposite to the lower surface or the lower side is defined as an upper surface, an upper side or a circumferential surface. Furthermore, two distal ends where the yokes (30) are mutually coupled are defined as one side, the other side or both sides.

Based on the concept of the present disclosure, a distal end of the one side of the yoke (30) is formed with an upper lug (31), and a distal end of the other side of the yoke (30) is formed with a lower lug (32).

Referring to FIG.3, although a left distal end of the yoke (30) is formed with the upper lug (31) and the lower lug (32) is formed at the right distal end of the yoke (30), these arrangement can be selectively chosen. Each of the lugs is preferably formed at upper and lower surfaces thereof with a shape of an arc having concentricity with the yoke (30), where the terms of concentricity means a center axis formed by the stator core (10 of FIG.2) coupled by the divided cores (20).

To be more specific, the upper lug (31) is formed with a staircase from the lower surface of the yoke (30) to the upper side of the yoke (30), whereby a lower lug accept portion (35) is formed at the lower side of the upper lug (31). Furthermore, the lower lug (32) is formed with a staircase from the upper surface of the yoke (30) to the lower side of the yoke (30), whereby an upper lug accept portion (36) is formed at the upper side of the lower lug (32).

As a result of the structure thus formed, a predetermined size of a space is formed at the lower side of the upper lug (31) and the upper side of the lower lug (32), whereby a lower space of the upper lug (31) is arranged with the lower lug (32) of the adjacent divided core (20), and likewise, an upper space of the lower lug (32) is arranged with the upper lug (31) of the adjacent divided core (20).

Preferably, a height of the upper lug (31) formed at a distal end of one side of the yoke (30), that is, a thickness to a circumferential direction conform to a height of a staircase sill at the upper side formed at a distal end of the other side. Likewise, a thickness of the lower lug (32) formed at a distal end of the other side of the yoke (30) preferably conforms to a height of a staircase sill at the lower side formed at a distal end of the one side.

Based on the foregoing concept, the lower surface of the upper lug (31) is formed with a lower accommodation unit (33), and the upper surface of the lower lug (32) is formed with an upper accommodation unit (34). The lower accommodation unit (33) is tightly coupled to the upper accommodation unit (34) of adjacent divided core (20).

Meanwhile, a lower end of the tooth (21) is formed with lugs (22), each lug (22) protruded to a circumferential direction with a predetermined width. The lugs (22) form an inner circumferential surface of the stator core (10) to encompass a magnet (not shown), which advantageously reduces a caulking torque, compared with a configuration of a simple arrangement of teeth.

An angle formed by both sides of the lug (22) from the center axis of the stator core (10) is one pitch (1 slot pitch) from rotation of the EPS motor.

FIG.4 is a plan view illustrating a core of EPS motor stator according to the present disclosure.

Referring to FIG.4, the upper and lower lugs (31, 32) are formed across the yoke (30), where the upper lug (31) is brought into contact and coupled with the lower lug of the divided core (20).

To be more specific, a distal end of the upper lug (31) at one side of the divided core (20) faces the upper lug accept portion (36) formed at the other side of the adjacent divided core (20), and the lower surface is brought into contact and coupled with the upper accommodation unit (34) of the adjacent divided core (20).

Referring to FIG.4, in a case the divided cores (20) are mutually coupled at the distal end of the yoke (30), the upper lugs (31) and the lower lugs (32) are alternatively arranged to form a zigzag along a circumference.

It should be noted that this arrangement has an advantage of greately broadening a contacted area over an area maintained by a simple contact between two distal ends and by a coupling force formed by lugs and grooves according to prior art.

Furthermore, it should be also noted that each of the upper/lower surfaces of the upper lug (31) and each of the upper/lower surfaces of the lower lug (32) form a concentric arc, such that the divided cores (20) can accurately form the concentricity when the divided cores (20) are mutually coupled.

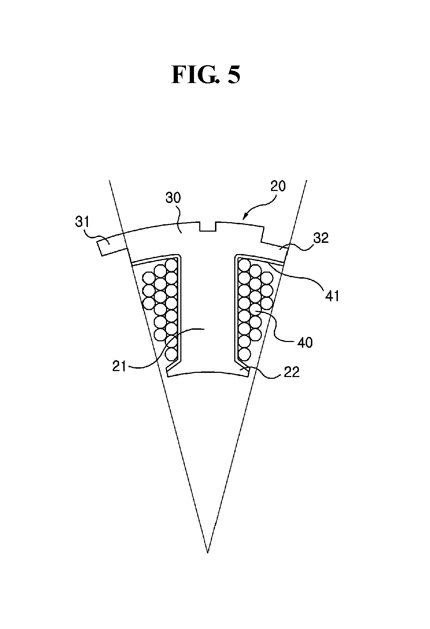

Meanwhile, FIG.5 is a plan view illustrating a coil wound on a divided core of EPS motor stator according to the present disclosure.

As explained above, an angle formed by both sides of the lug (22) from the center axis of the stator core (10) is one pitch (1 slot pitch) from rotation of the EPS motor. Coils (40) are wound along the circumference of the tooth (21), where the coils (40) are arranged in parallel in as many number as that of the divided core (20) on the stator core (10).

Based on the concept of the present disclosure, in a case the upper lug (31) and the lower lug (32) are formed across the yoke (30), the divided cores (20) are formed as a whole with an area exceeding one pitch. That is, the upper lug (31) is crossly brought into contact with an adjacent divided core (20), whereby there is generated a problem of forming a section of one pitch at each divided core (20). This problem is related to an area where an insulator (41) is coupled and the coil (40) is wound.

Therefore, the lower surface of the yoke (30), that is, an angle of an arc connecting a distal end of the lower lug (32) at a distal end of the other side of the yoke (30) from the lower lug accept portion (35) at a distal end of the one side of the yoke (30) is preferably formed with one pitch from the center axis.

In this case, the insulator (41) extensively insulates the lower surface of the yoke (30), the circumferential surface of the tooth (21) and the upper side of the lug (22), where the coil (40) is wound on the circumferential surface of the tooth (21).

In a case a section of one pitch of the divided core (20) is determined, it should be noted that there is an advantage of enhancing the assembly involved with the insulator (41), winding efficiency of coil, and accuracy of assembly.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A divided core of an EPS motor stator including a yoke forming a periphery of the stator core and a tooth protruded from the yoke to an inner circumferential direction, the divided core comprising: an upper lug circumferentially protruded on an upper side of a distal end of the yoke; and a lower lug circumferentially protruded on a lower side of the other distal end of the yoke.

2. The divided core of an EPS motor stator of claim 1, wherein each of upper and lower surfaces of the upper and lower lugs forms a concentric arc relative to a center axis of the stator core.

3. The divided core of an EPS motor stator of claim 1, further comprising: a lower lug accept portion formed at a lower side of the upper lug to form a staircase from a lower surface of the yoke; and an upper lug accept portion formed at an upper side of the lower lug to form a staircase from an upper surface of the yoke.

4. The divided core of an EPS motor stator of claim 3, wherein a thickness of the upper lug matches a height of the upper lug accept portion, and a thickness of the lower lug matches a thickness of the lower lug accept portion.

5. The divided core of an EPS motor stator of claim 3, wherein an angle formed by the lower lug accept portion and a distal end of the lower lug is one pitch of the EPS motor based on the center axis of the stator core.

6. The divided core of an EPS motor stator of claim 5, wherein the yoke, the lower surface of the lower lug and a periphery of the tooth are coupled by an insulator formed with insulating material and a coil.
